(19) **Europäisches Patentamt / European Patent Office / Office européen des brevets**

(11) **EP 2 514 691 B1**

(12) **EUROPEAN PATENT SPECIFICATION**

(45) Date of publication and mention
of the grant of the patent:
**29.01.2014 Bulletin 2014/05**

(51) Int Cl.:
*B65G 23/00* (2006.01)     *B65G 43/08* (2006.01)
*G01G 11/12* (2006.01)

(21) Application number: **11163584.3**

(22) Date of filing: **22.04.2011**

(54) **Control method for a conveyor belt**

Steuerverfahren für ein Förderband

Procédé de commande d'une courroie de transport

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.10.2012 Bulletin 2012/43**

(73) Proprietor: **Gefran S.p.A.**
**25050 Provaglio d'Iseo (Brescia) (IT)**

(72) Inventors:
• **Colombo, Claudio**
**I-20841, Carate Brianza, Monza E Brianza (IT)**
• **Rusconi, Maurizio**
**I-20147, Milano (IT)**
• **Uhrin, Rastislav**
**I-21047, Saronno, Varese (IT)**
• **Molteni, Roberto**
**I-21049, Tradate, Varese (IT)**

(74) Representative: **Mozzi, Matteo et al**
**Jacobacci & Partners S.p.A.**
**Via Senato, 8**
**20121 Milano (IT)**

(56) References cited:
GB-A- 512 634     GB-A- 736 345
US-A1- 2010 059 291

EP 2 514 691 B1

**Description**

<u>Field of the invention</u>

The present invention relates to a method for controlling the movement of a conveyor belt.

<u>Background art</u>

As known, an alternating-current electrical motor (AC), for example a three-phase motor, driven by the power supplied by an electronic device for industrial uses, such as in particular an inverter or drive, may be used for moving a conveyor belt.

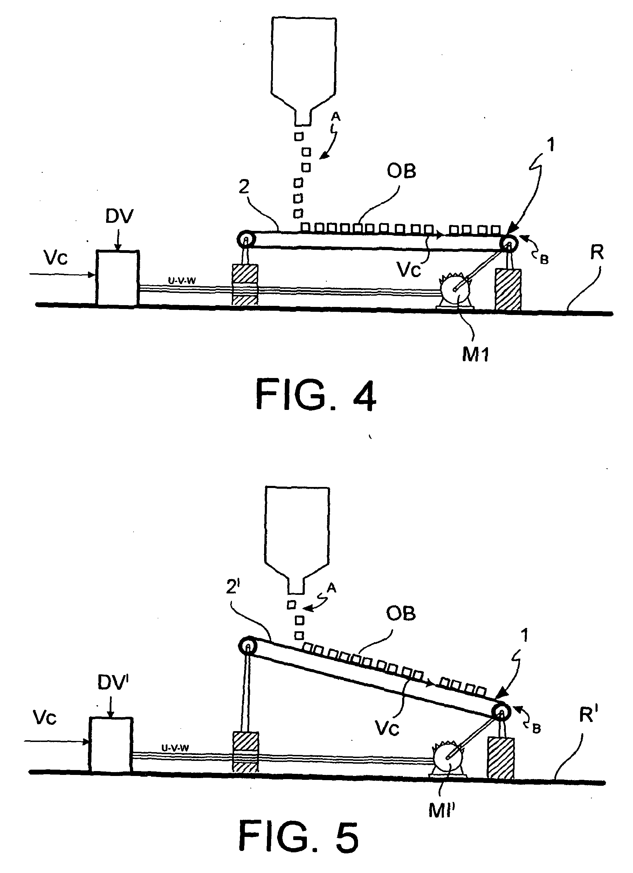

For example, with reference to figure 4, a traditional conveyor belt 1 comprises a support surface 2 for a load OB to be moved between a first A and a second B position, moved by sliding by the three-phase motor M1. In particular, a drive DV is configured for supplying electrical power to motor M1 for allowing it to generate a force for sliding the belt 1 parallel to the support surface 2 so as to move the belt itself at a speed Vc substantially constant. It should be noted that once the desired constant sliding speed Vc of the belt has been set on drive DV, if we exclude the effect of frictions generated by the friction of the mechanical parts of the moving belt 1, the sliding force imparted by motor M1 is substantially proportional to the weight of the load OB to be moved. As a consequence, the conveyor belt 1 of figure 4 kept fixed and substantially parallel to a reference surface R, has the drawback that if the weight of load OB increases over time, drive DV must compensate such increasing supplying a higher power to motor M1 for keeping the preset sliding speed Vc of the load substantially constant. Such reference surface R for example is the floor or base whereon the entire structure comprising the conveyor belt 1 rests.

Figure 5 shows a conveyor belt 1' inclined relative to the reference surface R' along the direction of the sliding motion, so that the distance from the reference surface R' of the end of belt 1' towards which load OB placed on the support plane 2' slides is less than the distance of the other end from the same reference surface R'. As is known, for such belt kept inclined 1' the weight force of load OB comprises a force component parallel to the support surface 2' and a force component perpendicular to the support surface. The above parallel component has the same direction of the sliding. Thus, load OB to be moved being equal, motor M1' of the inclined conveyor belt 1' of figure 5 supplies a sliding speed to the belt itself that is less than that supplied by motor M1 of figure 4 for keeping the sliding force Vc of the belt constant. In other words, subsequent to the inclination of belt 1', drive DV' of figure 5 supplies a lower power to the respective motor M1' than that required for moving belt 1 kept parallel to the reference surface R.

However, with reference to the inclined conveyor belt 1' of figure 5, an increase in the weight of load OB over time has the effect of increasing the component of the weight force parallel to the support surface 2', that is, increasing the contribution to the sliding force imparted by motor M1' in the sliding direction of belt 1'. This leads to an acceleration of load OB that must be compensated by drive DV' for keeping the preset sliding speed Vc constant. Such compensation may be a reduction of the power supplied by drive DV' to motor M1'. To high inclination values of belt 1', such power reduction may be such as to annul the power supplied by drive DV' to motor M1' up to the extreme condition wherein the motor M1' itself would supply power to drive DV'. However, in such extreme condition, the drive device DV' of the known type has the drawback of not being capable of accumulating or transferring to the mains the excess power amount received from motor M1', which is dissipated in the form of heat onto proper resistors.

Document US 2010/059291 A1 describes a method according to the preamble of claim 1, for weighing particulate material moving on a conveyor.

The object of the present invention is to devise and provide an electronic device, such as an inverter or a drive, adapted to pilot an alternating-current electrical motor (AC) for moving a conveyor belt having features that allow overcoming, at least partly, the limitations and/or the drawbacks of the known solutions.

Such object is achieved by the method according to claim 1. Preferred embodiments of the method are defined by the dependent claims 2-10.

<u>Brief description of the drawings</u>

Further features and advantages of above-mentioned device will appear more clearly from the following description of a preferred embodiment thereof, given by way of a non-limiting example with reference to the annexed figures, wherein:

**figure 1** shows a block diagram of the electronic control device of a conveyor belt of the invention;
**figure 2** schematically shows a moving system of a conveyor belt comprising the electronic control device of figure 1;
**figures 3A-3F** show patterns of electrical signals managed by the electronic control device of figure 1 as a function of time;

**figures 4 and 5** schematically show examples of conveyor belts moved by control devices of the known type.

<u>Detailed description</u>

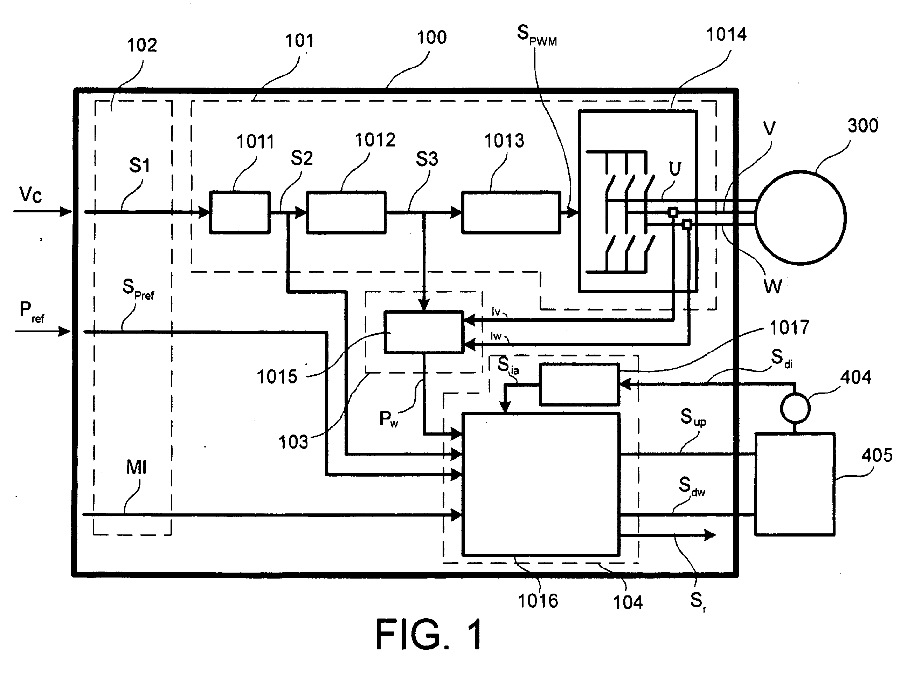

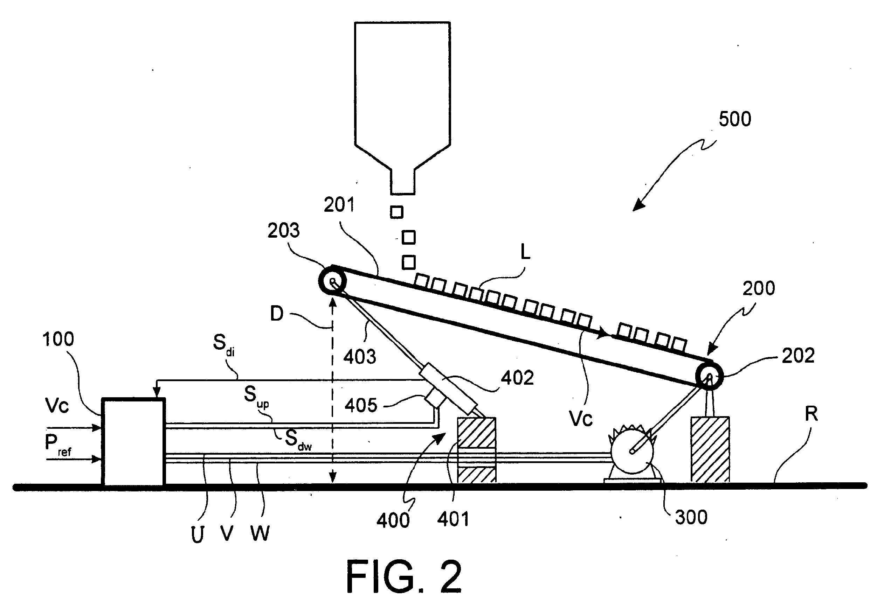

With reference to above-mentioned figures 1 and 2, reference numeral 100 indicates an electronic device, called inverter or drive by those skilled in the art, for controlling the movement of a conveyor belt 200, hereinafter also referred to simply as belt, according to the invention as a whole. In particular, such control device 100 is adapted to pilot an alternating-current electrical motor 300 (AC) operatively connected to a first fixed end 202 of belt 200 for starting/ stopping the movement of the belt itself. The alternating-current motor 300, for example an asynchronous three-phase motor, is configured for generating a sliding force of belt 200, parallel to a support surface 201 for a load L to be moved, for moving the belt to a substantially constant sliding speed Vc.

In addition, with reference to figure 2, the control device 100 of the invention is adapted to pilot means 400 for lifting/lowering the conveyor belt 200 for changing the inclination of the belt 200 itself relative to a reference surface R. Such reference surface R for example is the floor or base whereon the entire structure or system comprising the conveyor belt 200 rests, which shall be described hereinafter.

In particular, such lifting/lowering means 400, fixed to a support 401 of the belt, are operatively connected to a second end 203, or moving end, of the conveyor belt 200 opposite to the first end 202 for moving such second end 203 in order to change a distance D thereof from the reference surface R. Such distance D is the distance in orthogonal direction of the second end 203 of belt 200 from the reference surface R. Moreover, such lifting/lowering means 400 comprise an electrical motor 405, for example a direct-current motor (DC), adapted to actuate a piston 403. Such piston 403 has an end engaged with a worm screw 402 fixed to support 401, and an opposite end connected to the second end 203 of belt 200. Such worm screw 402 is rotatable about an axis in common with the piston 403 in clockwise or counter-clockwise direction for elongating/shortening a portion of piston 403 that is outside the worm screw 402. An elongation of such portion of piston 403 leads to an increase of the inclination of belt 200, that is, an increase in distance D, whereas a shortening of the same portion leads to a reduction of the belt inclination, that is, a reduction in distance D.

In an alternative embodiment, the lifting/lowering means 400 may comprise a pneumatic drive.

Drive 100 of the invention, the alternating-current motor 300 and the lifting/lowering means 400 of belt 200 form, with the conveyor belt 200 itself, a system for moving load L to be displaced which is globally indicated with reference numeral 500.

With reference now to the block diagram of figure 1, drive 100 comprises a driving unit 101 of the alternating-current motor 300 based on a first input speed signal S1 which is indicative of the constant sliding speed Vc to be imparted to belt 200. In greater detail, the driving unit 101 comprises a ramp generator block 1011 adapted to receive said first signal S1 for generating a respective second signal S2, or speed ramp, to be sent in input to a conversion block 1012 adapted to generate a third signal S3, or voltage ramp. The driving unit 101 further comprises a driving block 1013 which, once received the third signal S3, is configured for generating digital activation signals $S_{pwm}$, preferably pulse-width modulated signals PWM. The digital activation signals $S_{pwm}$ are provided in input to a power block 1014 of the driving unit 101.

As is known to a man skilled in the art, such activation signals PWM $S_{pwm}$ generally are six and are adapted to control the switching on/off of as many power transistors included in the power block 1014 of drive 100. The power transistors of the power block 1014, for example IGBT (Insulated Gate Bipolar Transistor) transistors, are connected to each other for forming a three-phase bridge, the outputs or phases U, V, W thereof supply voltage and current to the three-phase motor 300. Moreover, the driving block 1013 mentioned above comprises, for example, optocoupling devices adapted to pilot the gate terminals of the power transistors of the power block 1014 based on above-mentioned signals PWM.

Drive 100 further comprises a user interface unit 102 configured for allowing an operator to set both a constant reference sliding speed Vc to be imparted to belt 200 and a reference operating power amount $P_{ref}$ to be supplied to the alternating current motor 300 by drive 100. In particular, the user interface unit 102 is adapted to generate the above-mentioned first speed signal S1 starting from the set reference sliding speed value Vc. Likewise, the user interface unit 102 is adapted to generate a first power signal $S_{pref}$ indicative of the reference value set for power $P_{ref}$ to be supplied to motor 300.

Moreover, the user interface unit 102 of drive 100 is configured for generating a higher inclination signal M1 based on a configuration parameter indicative of the maximum inclination the conveyor belt 200 can take relative to the reference surface R.

Such user interface unit 102 preferably comprises a keyboard and a respective driving program.

In addition, drive 100 comprises an assessment unit 103 adapted to generate a further power signal $P_w$ corresponding to a measurement of the power supplied to the alternating-current motor 300, which may be expressed by the formula:

$$P = \sqrt{3} \ * \ V_{rt} \ * \ I \ * \ \cos \varphi \hspace{3cm} (1)$$

where $V_{rt}$ represents the desired voltage ramp S3 and I represents the current measured at the power block 1014.

Such assessment unit 103 comprises a computing block 1015 adapted to receive, at a first input, a measurement of at least two phase currents, for example currents Iv and Iw, supplied by the power block 1014 to the alternating-current motor 300. Moreover, the computing block 1015 is adapted to receive, at a second input, the third voltage signal S3 generated by the conversion block 1012 for supplying said further power signal $P_w$ in output.

Advantageously, the drive 100 further comprises a unit 104 for regulating the inclination of the conveyor belt 200 relative to the reference surface R. Such regulation unit 104 comprises a functional regulation block 1016 configured for piloting the direct-current motor 405 that changes the inclination of belt 200 by an electrical lifting signal $S_{up}$ and an electrical lowering signal $S_{dw}$. In particular, such signals $S_{up}$, $S_{dw}$ are generated by the functional regulation block 1016 in response to a processing by such block of said further power signal $P_w$, as well as of the second signal S2 or speed ramp and of the reference power signal $S_{pref}$.

It should be noted that the direct-current motor 405 is operatively associated to an encoding device (encoder) 404 adapted to transform the rotation of motor 405 in a pulse sequence $S_{di}$ indicative of the inclination of belt 200 relative to the reference surface R. To this end, the regulation unit 104 comprises a counter block 1017 adapted to count the pulses of sequence $S_{di}$ for supplying a respective signal $S_{ia}$ to the regulation block 1016 which is representative of the inclination of belt 200.

It should be noted that in drive 100 of figure 1, the power block 1014 is preferably made by an electronic circuit. The remaining blocks 1011, 1012, 1013, 1015, 1016, 1017 of drive 100 are functional blocks implemented in a microprocessor as an algorithm (software).

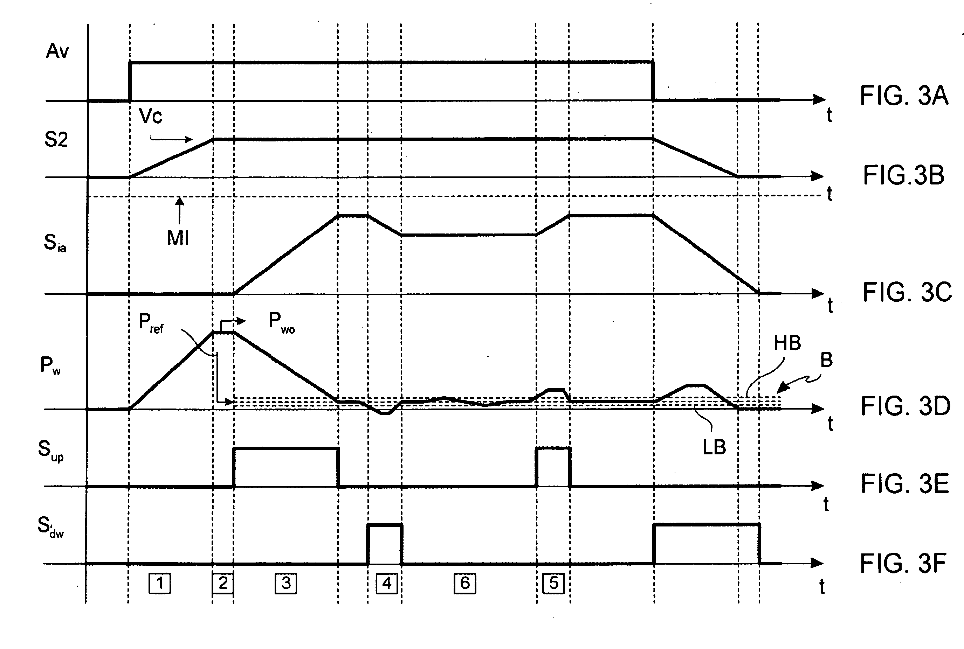

An example of operation of system 500 of figure 2 comprising the control device 100 of the invention shall be described hereinafter. To this end, reference shall be made to the patterns of signals of figures 3A-3F over time, wherein in particular:

figure 3A shows a temporal pattern of a signal Av for starting the alternating-current motor (AC) 300;
figure 3B shows a temporal pattern of the second signal S2;
figure 3C shows a temporal pattern of signal $S_{ia}$ representative of the inclination of belt 200;
figure 3D shows a temporal pattern of the further power signal $P_w$;
figure 3E shows a temporal pattern of the electrical lifting signal $S_{up}$ supplied to the direct-current motor 400, and
figure 3F shows a temporal pattern of the electrical lowering signal $S_{dw}$ supplied to the same direct current motor 400.

If an operator of system 500 wants to move a load L onto belt 200, at first he/she sets, by the user interface unit 102 of drive 100, both the desired reference sliding speed value Vc of belt 200 and the reference power value $P_{ref}$ that drive 100 supplies to the three-phase motor 300. Preferably, such reference power value $P_{ref}$ is necessarily set to a positive value near 0 to prevent the operation in the condition wherein energy goes from the alternating-current motor 300 to the drive 100 and to ensure maximum energy saving, as shall be explained hereinafter.

In a first step (step 1 of figures 3A-3F), subsequent to the start of the alternating-current motor 300, the second speed signal S2 increases according to a ramp pattern up to reaching the value corresponding to the set reference speed Vc. In such first step, belt 200 moved by the direct-current motor 400 is expected to move to horizontal position. Moreover, the value of the power signal $P_w$ increases linearly up to reaching the power value Pwo corresponding to a null inclination of belt 200, that is, to the belt arranged in horizontal parallel to the reference surface R.

In a subsequent step (step 2 of figures 3A-3F), the measurement of power $P_{w0}$ corresponding to a null inclination is associated in the functional regulation block 1016 to a respective variable indicative of the measurement of the power required for sliding belt 200 at the set constant reference speed Vc and keeping it in a position parallel to the reference surface R. The measurement made in such conditions is used when, subsequent to the change of the inclination of belt 200, the functional regulation block 1016 is capable of providing the operator with an information of power reduction supplied by drive 100 by a respective signal Sr.

In a subsequent third step (step 3 of figures 3A-3F), drive 100 starts the direct-current motor 400 enabling the lifting signal $S_{up}$ for linearly increasing the inclination $S_{ia}$ of belt 200 until the value of the power signal $P_w$ supplied to the alternating-current motor 300 gradually decreases up to reaching the desired reference power value $P_{ref}$, or inclination $S_{ia}$ reaches the maximum inclination value MI. In particular, in the example of figure 3D, the value of the power signal $P_w$ supplied to the alternating-current motor 300 gradually decreases up to reaching the reference power value $P_{ref}$. In that case, drive 100 stops the direct current motor 400 disabling the lifting signal $S_{up}$ for keeping the inclination value reached constant.

A subsequent step (step 4) of figures 3A-3F shows what happens subsequent to a variation of load L moved on belt 200, in particular an increase in the weight of load L. In that case, such weight increase has the effect of accelerating belt 200. This leads to a decrease in power $P_w$ to be supplied to the alternating-current motor 300 for compensating such acceleration. Drive 100 compensates such power reduction enabling the lowering signal $S_{dw}$ for actuating the direct current motor 400 that reduces inclination $S_{ia}$ of belt 200 relative to the reference surface R.

Vice versa, a subsequent step (step 5) of figures 3A-3F shows what happens as consequence of a variation of load L, in particular a decrease in the weight of load L. In that case, the weight decrease leads to an increase in power $P_w$ to be supplied to the alternating current motor 300 for keeping the set speed Vc constant. Drive 100 compensates such power increase enabling the lifting signal $S_{up}$ for actuating the direct-current motor 400 that increases inclination $S_{ia}$ of belt 200 relative to the reference surface R.

In an intermediate operating step (step 6 of figures 3A-3F), due to the variations of load L, increases and decreases in power $P_w$ supplied to the alternating current motor 300 are obtained. Such variations are of a small extent and cause no variations in the inclination of belt 200. Around the predetermined reference power value $P_{ref}$ there is a tolerance band B adapted to prevent undesired oscillations of belt 200 due to continuous variations in the inclination.

For example, higher HB and lower LB extremes of such tolerance band B may be calculated with the following mathematical relations:

$$HB = P_{ref} + 5\%P_{ref}$$

$$LB = P_{ref} - 5\%P_{ref}.$$

Advantageously, when power $P_w$ supplied by drive 100 to the alternating-current motor 300 becomes lower than the power value corresponding to a null inclination $P_{w0}$, the invention ensures energy saving. In particular, the functional regulation block 1016 of drive 100 is configured for calculating a reduction Re in percentage of the power supplied, by the following mathematical relation:

$$Re = \frac{P_w}{P_{w0}} * 100 \qquad\qquad (2)$$

which is advantageously provided outside the drive 100 to the operator through signal Sr.

The control device or drive 100 of the present invention has several advantages.

In fact, setting the reference power value $P_{ref}$ to a minimum value through the user interface unit 102, drive 100, in particular the functional regulation block 1016 is capable of regulating the inclination of belt 200 relative to the reference surface R for bringing the operating value of power $P_w$ supplied to the alternating-current motor 300 to approach or substantially reach the set reference power value $P_{ref}$.

Compared to the solutions of known drives, such regulation of the inclination of the conveyor belt 200 advantageously allows keeping the power $P_w$ supplied by drive 100 to the alternating-current motor 300 substantially constant, irrespective of the weight variations of load L conveyed by belt 200.

It should be noted that, load L being equal, the reduction of the power supplied to the alternating-current motor 300 for moving belt 200, when the latter is inclined, compared to the power supplied for moving belt 200 in horizontal position, leads to energy saving. The more power $P_w$ supplied to the alternating-current motor 300 approaches 0, the higher results the energy saving. Such energy saving is maximum when power $P_w$ supplied to the alternating-current motor 300 approaches or substantially reaches the power value corresponding to the set reference value $P_{ref}$.

Finally, with the drive 100 of the present invention that regulates the inclination of the conveyor belt 200 it is possible to obtain a protection of system 500 from the excess of braking energy to be dissipated, which would occur with high loads and slopes.

Regarding the embodiments of the electronic control device described above, a man skilled in the art, in order to satisfy contingent needs, can make modifications, adaptations and substitutions of elements with other functional equivalent elements, without departing from the scope of the following claims. Each of the features described as belonging to a possible embodiment can be made independent of the other described embodiments.

**Claims**

1. A control method for a conveyor belt (200) slidingly actuated by an alternating-current electrical motor (300) operatively associated to the belt (200), comprising the steps of:

   driving, by a driving unit (101) of an electronic control device (100), said alternating-current electrical motor (300) on the basis of a first signal (S1) indicative of a reference sliding speed (Vc) to be imparted to the belt (200);
   generating, by an assessment unit (103) of said electronic device (100), a second signal ($P_w$) indicative or the power supplied to said alternating-current electrical motor (300) starting from an electrical voltage Signal (S3) generated in said driving unit (101) based on said first signal (S1) and on a signal indicative of a phase current (Iv, Iw) supplied to the alternating-current electrical motor (300),
   **characterised by** the step of regulating an inclination of the conveyor belt (200) relative to a reference surface (R) based on said second signal (Pw) with a regulating unit (104), said regulation unit (104) being configured for piloting means (400) for lifting/lowering the belt (200) operatively associated to a moving end (203) of the belt (200) for lifting/lowering said moving end (203) changing the inclination of the belt relative to the reference surface (R).

2. A control method for a conveyor belt (200) according to claim 1, wherein said regulating further comprises the step of piloting, by said regulation unit (104), lifting/lowering means (400) of the belt (200) by an electrical lifting signal ($S_{up}$) and an electrical lowering signal ($S_{dw}$) for changing the inclination of the belt (200) relative to the reference surface (R).

3. A control method for a conveyor belt (200) according to claim 2, further comprising the step of generating, by a functional regulation block (1016) of the regulation unit (104), said electrical lifting ($S_{up}$) and lowering ($S_{dw}$) signals in response to said second signal ($P_w$) indicative of the power supplied to the alternating-current electrical motor (300).

4. A control method for a conveyor belt (200) according to claim 3, further comprising the step of calculating, by said functional regulation block (1016), a reduction (Re) in percentage of the power supplied to the alternating-current motor (300) based on said second signal ($P_w$) and on a power value ($P_{w0}$) corresponding to a null inclination of the belt (200) relative to the reference surface (R).

5. A control method for a conveyor belt (200) according to claim 1, comprising the further steps, performed by a user interface unit (102) of the electronic control device (100), of:

   - generating said first signal (S1) starting from the reference sliding speed value (Vc);
   - generating a power signal ($S_{pref}$) indicative of a reference value set for the power ($P_{ref}$) to be supplied to the alternating-current electrical motor (300).

6. A control method for a conveyor belt (200) according to claim 5, comprising the step of receiving, by said regulation unit (104), said power signal ($S_{pref}$) and a ramp signal (S2) generated by said driving unit (101) based on the first signal (S1).

7. A control method for a conveyor belt (200) according to claims 3 and 5, wherein for compensating a reduction of said second signal ($P_w$), further comprising enabling, by said functional regulation block (1016), said lowering signal ($S_{dw}$) for reducing the inclination of the conveyor belt (200) relative to the reference surface (R) so that said second signal ($P_w$) is increased to reach the reference power value ($P_{ref}$).

8. A control method for a conveyor belt (200) according to claim 3 and 5, wherein for compensating an increasing of said second signal ($P_w$), further comprising enabling, by said functional regulation block (1016), said lifting signal ($S_{up}$) for increasing the inclination of the conveyor belt (200) relative to the reference surface (R).

9. A control method for a conveyor belt (200) according to claim 2, wherein said lifting/lowering means (400) comprise a direct-current (DC) electrical motor (405) operatively associated to said moving end (203) of the belt (200).

10. A control method for a conveyor belt (200) according to claim 9, further comprising the step of supplying, by a counter block (1017) of said regulation unit (104), a signal ($S_{ia}$) to the functional regulation block (1016) indicative of an inclination of the conveyor belt (200) based on a pulse sequence ($S_{di}$) generated by said direct-current motor (405).

**EP 2 514 691 B1**

**Patentansprüche**

1. Steuer-/Regelverfahren für ein Transportband (200), welches gleitend von einem elektrischen Wechselstrom-Motor (300) betätigt wird, welcher betriebsmäßig dem Band (200) zugeordnet ist, umfassend die Schritte:

   Antreiben des elektrischen Wechselstrom-Motors (300) durch eine Antriebs-Einheit (101) einer elektronischen Steuer-/Regelvorrichtung (100) auf der Grundlage eines ersten Signals (S1), welches eine Referenz-Gleitgeschwindigkeit (Vc) angibt, welche an das Band (200) weitergegeben werden soll;
   Erzeugen eines zweiten Signals (PW) durch eine Auswertungs-Einheit (103) der elektronischen Vorrichtung (100), welches die Leistung angibt, welche an den elektrischen Wechselstrom-Motor (300) geliefert wird, ausgehend von einem elektrischen Spannungs-Signal (S3), welches in der Antriebs-Einheit (101) erzeugt wird auf Grundlage des ersten Signals (S1) und eines Signals, welches einen Phasenstrom (Iv, Iw) angibt, welcher an den elektrischen Wechselstrom-Motor (300) geliefert wird,
   **gekennzeichnet durch** den Schritt eines Regulierens einer Neigung des Transportbands (200) relativ zu einer Referenzfläche (R) auf Grundlage des zweiten Signals (Pw) mit einer Regulierungs-Einheit (104), wobei die Regulierungs-Einheit (104) eingerichtet ist für Führungsmittel (400) zum Heben/Senken des Bands (200), welche betriebsmäßig einem sich bewegenden Ende (203) des Bands (200) zum Heben/Senken des sich bewegenden Endes (203) zugeordnet sind, wobei sich die Neigung des Bands relativ zu der Referenzfläche (R) ändert.

2. Steuer-/Regelverfahren für ein Transportband (200) nach Anspruch 1, wobei das Regulieren ferner den Schritt des Führens von Hebe-/Senk-Mitteln (400) des Bands (200) durch die Regulierungs-Einheit (104) durch ein elektrisches Hebe-Signal (Sup) und ein elektrisches Senk-Signal (Sdw) zum Ändern der Neigung des Bands (200) relativ zu der Referenzfläche (R) umfasst.

3. Steuer-/Regelverfahren für ein Transportband (200) nach Anspruch 2, ferner umfassend den Schritt eines Erzeugens der elektrischen Hebe-(Sup) und Senk-(Sdw)Signale durch einen funktionalen Regulierungs-Block (1016) der Regulierungs-Einheit (104) als Reaktion auf das zweite Signal (PW), welches die an den elektrischen Wechselstrom-Motor (300) gelieferte Leistung angibt.

4. Steuer-/Regelverfahren für ein Transportband (200) nach Anspruch 3, ferner umfassend den Schritt eines Berechnens einer prozentualen Reduktion (Re) der an den elektrischen Wechselstrom-Motor (300) gelieferten Leistung durch den funktionalen Regulierungs-Block (1016) auf Grundlage des zweiten Signals (PW) und eines Leistungswerts (PW0), welcher einer Steigung des Bands (200) von Null relativ zu der Referenzfläche (R) entspricht.

5. Steuer-/Regelverfahren für ein Transportband (200) nach Anspruch 1, umfassend die weiteren, von einer Benutzer-Schnittstellen-Einheit (102) der elektronischen Steuer-/Regelvorrichtung (100) ausgeführten Schritte:

   - Erzeugen des ersten Signals (S1) ausgehend von dem Referenz-Gleitgeschwindigkeitswert (Vc);
   - Erzeugen eines Leistungssignals (Spref), welches einen Referenz-Wertesatz für die Leistung (Pref), welche an den elektrischen Wechselstrom-Motor (300) geliefert werden soll, angibt.

6. Steuer-/Regelverfahren für ein Transportband (200) nach Anspruch 5, welches den Schritt eines Empfangens des Leistungssignals (Spref) und eines von der Antriebs-Einheit (101) auf Grundlage des ersten Signals (S1) erzeugten Rampen-Signals (S2) durch die Regulierungs-Einheit (104) umfasst.

7. Steuer-/Regelverfahren für ein Transportband (200) nach den Ansprüchen 3 und 5, wobei das Verfahren zum Kompensieren einer Verringerung des zweiten Signals (Pw) ferner ein Aktivieren des Senk-Signals (Sdw) durch den funktionalen Regulierungs-Block (1016) umfasst, wobei das Senk-Signal (Sdw) zum Verringern der Neigung des Transportbands (200) relativ zu der Referenz-Fläche (R) vorgesehen ist, so dass das zweite Signal (PW) erhöht wird, um die Referenz-Leistung (Pref) zu erreichen.

8. Steuer-/Regelverfahren für ein Transportband (200) nach den Ansprüchen 3 und 5, wobei das Verfahren zum Kompensieren einer Erhöhung des zweiten Signals (Pw) ferner ein Aktivieren des Hebe-Signals (Sup) durch den funktionalen Regulierungs-Block (1016) umfasst, wobei das Hebe-Signal (Sup) zum Erhöhen der Neigung des Transportbands (200) relativ zu der Referenz-Fläche (R) vorgesehen ist.

9. Steuer-/Regelverfahren für ein Transportband (200) nach Anspruch 2, wobei die Hebe-/Senk-Mittel (400) einen

7

elektrischen Gleichstrom (DC)-Motor (405) umfassen, welcher betriebsmäßig dem sich bewegenden Ende (203) des Bands (200) zugeordnet ist.

10. Steuer-/Regelverfahren für ein Transportband (200) nach Anspruch 9, ferner umfassend den Schritt eines Lieferns eines Signals (Sia) durch einen Zähler-Block (1017) der Regulierungs-Einheit (104) an den funktionalen Regulierungs-Block (1016), welches eine Neigung des Transportbands (200) auf Grundlage einer Puls-Sequenz (Sdi) angibt, welche von dem elektrischen GleichstromMotor (405) erzeugt wird.

## Revendications

1. Procédé de commande pour une courroie transporteuse (200) actionnée de manière coulissante par un moteur électrique à courant alternatif (300) opérationnellement associé à la courroie (200), comprenant les étapes consistant à :

   entraîner, avec une unité d'entraînement (101) d'un dispositif de commande électronique (100), ledit moteur électrique à courant alternatif (300) en fonction d'un premier signal (S1) indicatif d'une vitesse de coulissement de référence (Vc) à communiquer à la courroie (200) ;
   générer, avec une unité d'évaluation (103) dudit dispositif électronique (100), un second signal (Pw) indicatif de la puissance fournie audit moteur électrique à courant alternatif (300) à partir d'un signal de tension électrique (S3) généré dans ladite unité d'entraînement (101) en fonction dudit premier signal (S1) et en fonction d'un signal indicatif d'un courant de phase (Iv, Iw) fourni au moteur électrique à courant alternatif (300), **caractérisé par** l'étape consistant à réguler une inclinaison de la courroie transporteuse (200) par rapport à une surface de référence (R) en fonction dudit second signal (Pw), avec une unité de régulation (104), ladite unité de régulation (104) étant configurée pour piloter des moyens (400) pour lever/abaisser la courroie (200) opérationnellement associés à une extrémité mobile (203) de la courroie (200) pour lever/abaisser ladite extrémité mobile (203), changeant l'inclinaison de la courroie par rapport à la surface de référence (R).

2. Procédé de commande pour une courroie transporteuse (200) selon la revendication 1, dans lequel ladite étape de régulation comprend en outre l'étape consistant à piloter, avec ladite unité de régulation (104), des moyens de levée/abaissement (400) de la courroie (200) avec un signal de levée électrique (Sup) et un signal d'abaissement électrique (Sdw) afin de modifier l'inclinaison de la courroie (200) par rapport à la surface de référence (R).

3. Procédé de commande pour une courroie transporteuse (200) selon la revendication 2, comprenant en outre l'étape consistant à générer, avec un bloc de régulation fonctionnel (1016) de l'unité de régulation (104), lesdits signaux de levée (Sup) et d'abaissement (Sdw) électriques en réponse audit second signal (Pw) indicatif de la puissance fournie au moteur électrique à courant alternatif (300).

4. Procédé de commande pour une courroie transporteuse (200) selon la revendication 3, comprenant en outre l'étape consistant à calculer, avec ledit bloc de régulation fonctionnel (1016), une réduction (Re) de pourcentage de la puissance fournie au moteur à courant alternatif (300) en fonction dudit second signal (Pw) et en fonction d'une valeur de puissance (Pw0) correspondant à une inclinaison nulle de la courroie (200) par rapport à la surface de référence (R).

5. Procédé de commande pour une courroie transporteuse (200) selon la revendication 1, comprenant les étapes supplémentaires, réalisées avec une unité d'interface utilisateur (102) du dispositif de commande électronique (100), consistant à :

   générer ledit premier signal (S1) à partir de la valeur de vitesse de coulissement de référence (Vc) ;
   générer un signal de puissance (Spref) indicatif d'une valeur de référence déterminée pour la puissance (Pref) à fournir au moteur électrique à courant alternatif (300).

6. Procédé de commande pour une courroie transporteuse (200) selon la revendication 5, comprenant l'étape consistant à recevoir, avec ladite unité de régulation (104), ledit signal de puissance (Spref) et un signal de rampe (S2) généré par ladite unité d'entraînement (101) en fonction du premier signal (S1).

7. Procédé de commande pour une courroie transporteuse (200) selon les revendications 3 et 5, dans lequel, pour compenser une réduction dudit second signal (Pw), comprenant en outre l'étape consistant à permettre, grâce audit bloc de régulation fonctionnel (1016), audit signal d'abaissement (Sdw) de réduire l'inclinaison de la courroie transporteuse (200) par rapport à la surface de référence (R) de sorte que ledit second signal (Pw) est augmenté pour atteindre la valeur de puissance de référence (Pref).

8. Procédé de commande pour une courroie transporteuse (200) selon les revendications 3 et 5, dans lequel, pour compenser une augmentation dudit second signal (Pw), comprenant en outre l'étape consistant à permettre, grâce audit bloc de régulation fonctionnel (1016), audit signal de levée (Sup) d'augmenter l'inclinaison de la courroie transporteuse (200) par rapport à la surface de référence (R).

9. Procédé de commande pour une courroie transporteuse (200) selon la revendication 2, dans lequel lesdits moyens de levée/abaissement (400) comprennent un moteur électrique à courant continu (DC)(405) opérationnellement associé à ladite extrémité mobile (203) de la courroie (200).

10. Procédé de commande pour une courroie transporteuse (200) selon la revendication 9, comprenant en outre l'étape consistant à fournir, par un bloc de compteur (1017) de ladite unité de régulation (104), un signal (Sia) au bloc de régulation fonctionnel (1016) indicatif d'une inclinaison de la courroie transporteuse (200) en fonction d'une séquence d'impulsion (Sdi) générée par ledit moteur à courant continu (405).

FIG. 1

EP 2 514 691 B1

FIG. 2

FIG. 3A

FIG. 3B

FIG. 3C

FIG. 3D

FIG. 3E

FIG. 3F

Av

S2

$S_{ia}$

$P_w$

$S_{up}$

$S_{dw}$

Vc

MI

$P_{ref}$

$P_{wo}$

HB

B

LB

1  2  3  4  6  5

EP 2 514 691 B1

FIG. 4

FIG. 5

13

**EP 2 514 691 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010059291 A1